# EUROPEAN PATENT APPLICATION

(11) **EP 2 615 884 A1**
(43) Date of publication of application: **17.07.2013**
(21) Application number: 13150946.5
(22) Date of filing: 11.01.2013
(51) Int. Cl.: H04W 88/08

(54) **Wireless local area network and method for communicating by using wireless local area network**

(30) Priority: 16.01.2012 CN 201210012675
(71) Applicant: Huawei Technologies Co., Ltd., Longgang District, Shenzhen Guangdong 518129 (CN)
(72) Inventor: Yang, Jianrui, 518129 Shenzhen (CN); Liu, Fang, 518129 Shenzhen (CN); Zhang, Shusheng, 518129 Shenzhen (CN); Diao, Ruiqiang, 518129 Shenzhen (CN)
(74) Representative: Körber, Martin Hans

(57) **Abstract**

The present invention provides a wireless local area network WLAN and a method for communicating by using the WLAN, which includes at least one radio module and an access controller. The radio module converts a first air interface wireless signal from a station into a first baseband signal, and bears the first baseband signal on an Ethernet and sends the first baseband signal to the access controller. The access controller processes the first baseband signal to generate first service data, and forwards the first service data. The access controller further receives second service data, processes the second service data to generate a second baseband signal, and bears the second baseband signal on the Ethernet and sends the second baseband signal to the at least one radio module. The present invention can increase the efficiency and utilization rate of a spectrum.

## Description

### FIELD OF THE INVENTION

The present invention belongs to the field of communications technologies, and in particular, relates to a wireless local area network and a method for communicating by using the wireless local area network.

### BACKGROUND OF THE INVENTION

With the rapid development of the application of a wireless local area network (Wireless Local Area Network, WLAN for short), now operators need to establish a continuous and seamless wireless fidelity (WI-FI, wireless fidelity) network architecture when deploying a WLAN network, and an access controller (Access Controller, AC for short) + fit access point (Access Point, AP for short) network architecture also gradually become the mainstream trend.

The wireless local area network architecture of the AC + fit AP can manage and deploy security policies in a centralized manner. Specifically, the fit AP and a wireless switch may be connected directly, may also be connected through a layer 2 network, and may also be connected through a layer 3 network. In the AC + fit AP network architecture, all configuration is centralized in the wireless controller AC, and there is "zero configuration" in the fit AP, so that the solution of the AC + fit AP is more convenient for centralized management and has functions of layer 3 roaming, user-based authorization, and so on.

However, in the AC + fit AP network architecture, each AP only can process signals received and transmitted in its own cell, and the biggest difficulty at present is serious interference. It is difficult to suppress interference when each AP works independently. Moreover, the actual utilization rate of an existing AP is still very low, the average load of the network is much lower than the busy-hour load in general, and different APs cannot share the processing capability.

### SUMMARY OF THE INVENTION

The present invention provide a wireless local area network and a method for communicating by using the wireless local area network, so as to solve the problem that mutual interference between signals and the low efficiency and utilization rate of a spectrum in an existing wireless local area network.

In a first aspect, a wireless local area network is provided, which includes at least one radio module and an access controller connected to the radio module, in which
the radio module is configured to convert a first air interface wireless signal from a station into a first baseband signal, and bear the first baseband signal on an Ethernet and send the first baseband signal to the access controller;
the access controller is configured to process the first baseband signal from the at least one radio module to generate first service data, and forward the first service data;
the access controller is further configured to receive second service data to be sent to the at least one radio module, process the second service data to generate a second baseband signal, and bear the second baseband signal on the Ethernet and send the second baseband signal to the at least one radio module; and
the radio module is further configured to convert the second baseband signal into a second air interface wireless signal, and transmit the second air interface wireless signal to the station.

In a first implementation form according to the first aspect, wherein the at least one radio module is connected to the access controller through optical fibers or network cables; or
connected through a layer 2 network; or
connected through a layer 3 network.

In a second implementation form according to the first aspect as such or according to the first implementation form of the first aspect, wherein the access controller specifically includes:
a service data generating module, configured to demodulate and decode the first baseband signal from the at least one radio module in a centralized manner, to generate the first service data;
a service data forwarding module, configured to forward the first service data;
a service data receiving module, configured to receive the second service data to be sent to the at least one radio module;
a baseband signal generating module, configured to encode and modulate the second service data to generate the second baseband signal; and
a baseband signal sending module, configured to bear the second baseband signal on the Ethernet and send the second baseband signal to the at least one radio module.

In a third implementation form according to the first aspect as such or according to the any of the preceding implementation forms of the first aspect, wherein the radio module specifically includes:
a down-conversion unit, configured to perform down-conversion processing on the first air interface wireless signal received through an antenna;
an analog-to-digital conversion unit, configured to convert the first air interface wireless signal, which is processed by the down-conversion unit, into the first baseband signal;
a signal bearing unit, configured to bear the first baseband signal on the Ethernet and send the first baseband signal to the access controller;
a digital-to-analog conversion unit, configured to convert the second baseband signal from the access controller into an analog signal; and
an up-conversion unit, configured to perform up-conversion processing on the analog signal output by the digital-to-analog conversion unit, to generate the second air interface wireless signal, and transmit the second air interface wireless signal to the station through the antenna.

In a forth implementation form according to the first aspect as such or according to the any of the preceding implementation forms of the first aspect, wherein the wireless local area network further comprises:
a remote authentication dial in user service RADIUS; or
a station; or
a remote authentication dial in user service RADIUS and a station.

In a second aspect, a method for communicating by using the wireless local area network as described above is provided, which includes:
receiving, by an access controller, a first baseband signal sent by at least one radio module; and
processing, by the access controller, the first baseband signal to generate first service data, and forwarding the first service data.

In a first implementation form according to the second aspect, the method further includes:
receiving, by the access controller, second service data to be sent to the at least one radio module; and
processing, by the access controller, the second service data to generate a second baseband signal, and bearing the second baseband signal on an Ethernet and sending the second baseband signal to the at least one radio module.

In a second implementation form according to the second aspect as such or according to the first implementation form of the second aspect, wherein the processing, by the access controller, the first baseband signal to generate the first service data, and forwarding the first service data is specifically:
demodulating and decoding, by the access controller, the first baseband signal in a centralized manner, to generate the first service data, and forwarding the first service data.
In a third aspect, a method for communicating by using the wireless local area network as described above is provided, which includes:
receiving, by a radio module, through an antenna, a first air interface wireless signal sent by a station; and
converting, by the radio module, the first air interface wireless signal into a first baseband signal, and bearing the first baseband signal on an Ethernet and sending the first baseband signal to an access controller, so that the access controller processes the first baseband signal to generate first service data, and forwards the first service data.

In an implementation form according to the third aspect, the method further includes:
receiving, by the radio module, a second baseband signal sent by the access controller, wherein the second baseband signal is generated after the access controller processes second service data to be sent to the radio module, and the second baseband signal is borne through the Ethernet; and
converting, by the radio module, the second baseband signal into a second air interface wireless signal, and transmitting the second air interface wireless signal to a station through the antenna.

In the embodiments of the present invention, baseband signals sent by multiple radio modules may be processed through the access controller in a centralized manner; and service data to be sent to multiple modules may also be processed through the access controller in a centralized manner, and then sent to the multiple radio modules. Advantages of a processor in the access controller can be brought into full play, and by processing a first baseband signal from at least one radio module in a centralized manner by the access controller, resource sharing and dynamic scheduling can be implemented, interference can be reduced, spectrum efficiency can be increased and energy consumption can be reduced, so as to achieve the integrated wireless and wired operation with high quality, low costs and high bandwidth and flexibility.

### BRIEF DESCRIPTION OF THE DRAWINGS

FIG. 1 is a schematic diagram of a wireless local area network provided by an embodiment of the present invention;
FIG. 2 is a structural block diagram of an access controller in a wireless local area network provided by an embodiment of the present invention;
FIG. 3 is a structural block diagram of a radio module in a wireless local area network provided by an embodiment of the present invention;
FIG. 4 is a schematic diagram of a first connection manner of a wireless local area network provided by an embodiment of the present invention;
FIG. 5 is a schematic diagram of a second connection manner of a wireless local area network provided by an embodiment of the present invention;
FIG. 6 is a schematic diagram of a third connection manner of a wireless local area network provided by an embodiment of the present invention;
FIG. 7 is an implementation flow chart of a method for communicating by using the wireless local area network shown in FIG. 1 provided by an embodiment of the present invention; and
FIG. 8 is an implementation flow chart of a method for communicating by using the wireless local area network shown in FIG. 1 provided by an embodiment of the present invention.

### DETAILED DESCRIPTION OF THE EMBODIMENTS

To make the objective, technical solution, and advantage of the present invention more comprehensible, the following describes the present invention in detail with reference to the accompanying drawings and embodiments. It should be understood that the specific embodiments are only used to explain the present invention and are not intended to limit the present invention.

In embodiments of the present invention, by adopting an access controller AC + RM architecture, on one hand, advantages of a processor in an access controller can be brought into full play; on the other hand, by processing a first baseband signal from at least one radio module in a centralized manner by the access controller, resource sharing and dynamic scheduling can be implemented, interference can be reduced, spectrum efficiency can be increased and energy consumption can be reduced, so as to achieve the integrated wireless and wired operation with high quality, low costs and high bandwidth and flexibility.

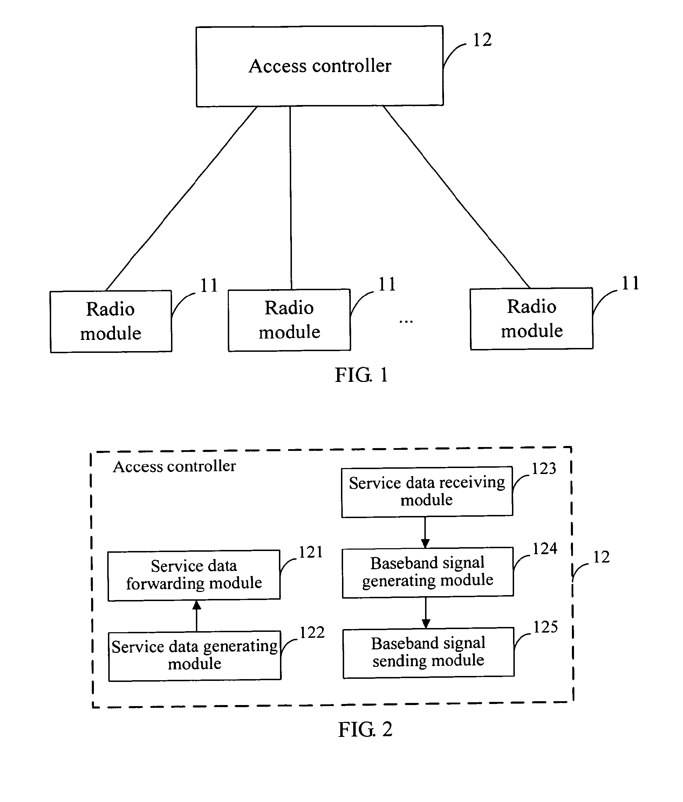

FIG. 1 is a schematic diagram of a wireless local area network provided by an embodiment of the present invention, and for the convenience of description, only shows the part related to the embodiment of the present invention. The wireless local area network includes: at least one radio module (Radio Module, RM) 11 and an access controller 12 connected to the radio module 11.

The radio module 11 is configured to convert a first air interface wireless signal from a station into a first baseband signal, and bear the first baseband signal on an Ethernet and send the first baseband signal to the access controller 12.

The access controller 12 is configured to process the first baseband signal from the at least one radio module 11 to generate first service data, and forward the first service data.

The access controller 12 is further configured to receive second service data to be sent to the at least one radio module 11, process the second service data to generate a second baseband signal, and bear the second baseband signal on the Ethernet and send the second baseband signal to the at least one radio module 11.

The radio module 11 is further configured to convert the second baseband signal into a second air interface wireless signal, and transmit the second air interface wireless signal to the station.

The access controller 12 may be a wireless switch or a wireless router, or the like. By processing the baseband signal between the access controller 12 and the at least one radio module 11 in a centralized manner by the access controller 12, wireless resource sharing and dynamic scheduling can be implemented, signal interference can be reduced, and the efficiency and utilization rate of a spectrum can be increased.

Further, FIG. 2 is a structural block diagram of an access controller in a wireless local area network provided by an embodiment of the present invention, and for the convenience of description, only shows the part related to the embodiment of the present invention. Specifically, an access controller 12 includes: a service data generating module 121, a service data forwarding module 122, a service data receiving module 123, a baseband signal generating module 124 and a baseband signal sending module 125.

The service data generating module 121 is configured to demodulate and decode a first baseband signal from at least one radio module 11 in a centralized manner, to generate first service data.

The service data forwarding module 122 is configured to forward the first service data.

The service data receiving module 123 is configured to receive second service data to be sent to the at least one radio module 11.

The baseband signal generating module 124 is configured to encode and modulate the second service data to generate a second baseband signal.

The baseband signal sending module 125 is configured to bear the second baseband signal on an Ethernet and send the second baseband signal to the at least one radio module 11.

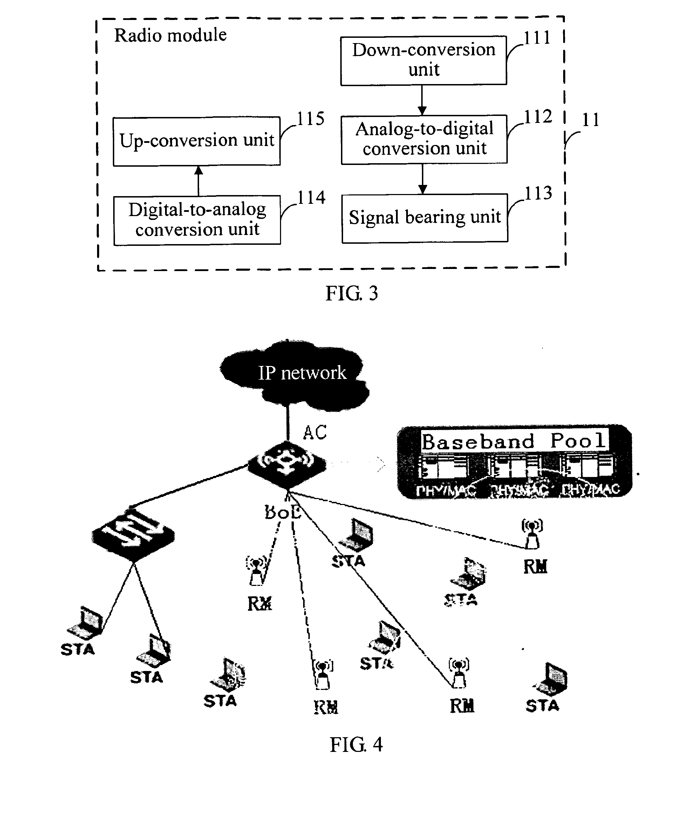

Further, FIG. 3 is a structural block diagram of a radio module in a wireless local area network provided by an embodiment of the present invention, and for the convenience of description, only shows the part related to the embodiment of the present invention. Specifically, a radio module 11 includes: a down-conversion unit 111, an analog-to-digital conversion unit 112, a signal bearing unit 113, a digital-to-analog conversion unit 114 and an up-conversion unit 115.

The down-conversion unit 111 is configured to perform down-conversion processing on a first air interface wireless signal that is received through an antenna.

The analog-to-digital conversion unit 112 is configured to convert the first air interface wireless signal, which is processed by the down-conversion unit 111, into a first baseband signal.

The signal bearing unit 113 is configured to bear the first baseband signal on an Ethernet and send the first baseband signal to an access controller 12.

The digital-to-analog conversion unit 114 is configured to convert a second baseband signal from the access controller 12 into an analog signal.

The up-conversion unit 115 is configured to perform up-conversion processing on the analog signal output by the digital-to-analog conversion unit 114, to generate a second air interface wireless signal, and transmit the second air interface wireless signal to a station through an antenna.

The radio module 11 can be easily integrated with the antenna to implement integration. According to the size of the network, the access controller 12 and the radio module 11 in the wireless local area network may be connected in the following three manners, which are detailed below.

In a first manner, when the size of the network is small, for example, for a small- and medium-sized enterprise network, the access controller 12 and the radio module 11 may be connected through an optical fiber or a network cable directly. As shown in FIG. 4, multiple radio modules RMs are connected to an access controller AC through optical fibers or network cables directly; and baseband signals transmitted between the multiple radio modules RMs and the access controller AC are borne on an Ethernet, that is, the baseband signals are transmitted between the multiple radio modules RMs and the access controller AC in a manner of baseband data on Ethernet (Baseband Data on Ethernet, BoE).

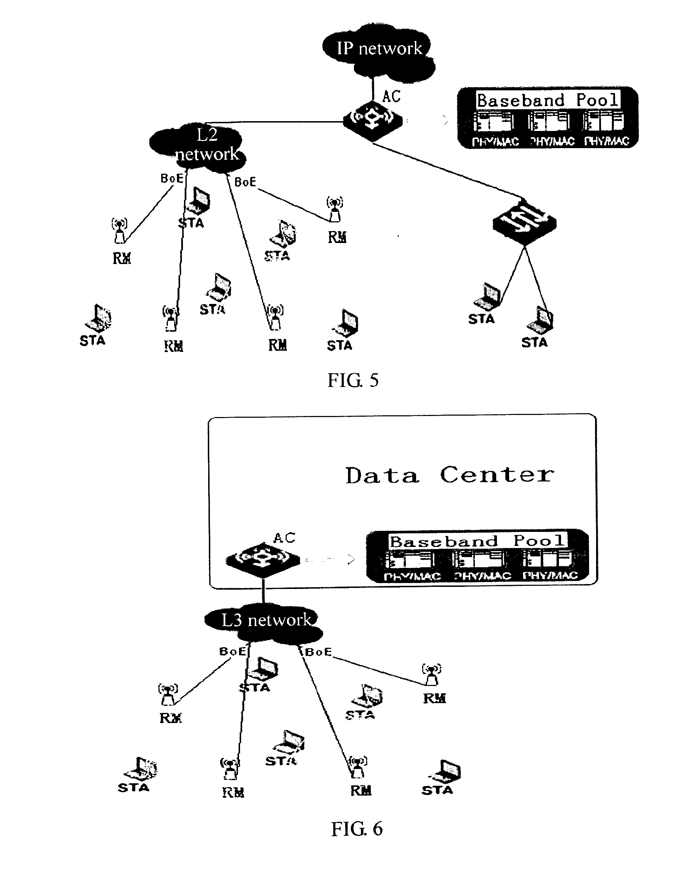

In a second manner, when the size of the network is large, for example, for a campus network, an access controller 12 is connected to multiple radio modules 11 through a layer 2 network. As shown in FIG. 5, multiple radio modules RMs are connected to an access controller AC through the layer 2 network (L2 network).

In a third manner, when the bandwidth and quality of service of a wired network are improved significantly, a WLAN group across several campuses may be centralized, the service data generating module 121, the service data forwarding module 122, the service data receiving module 123, the baseband signal generating module 124 and the baseband signal sending module 125 of an access controller 12 are built in a super server in a data center (Data Center, DC), and by using the super server in the data center as a baseband pool (Baseband Pool), the access controller 12 is connected to the multiple radio modules 11 through a layer 3 network. As shown in FIG. 6, multiple radio modules RMs are connected to an access controller AC through the layer 3 network (L3 network).

When an access controller AC and an RM are connected through the layer 2 network, a switch may further be included between the access controller AC and the RM; when the access controller AC is connected to the RM through the layer 3 network, a switch, a router and so on may further be included between the access controller AC and the RM.

When the radio module 11 is connected to the access controller 12 through a wired network, the wired network may be an Ethernet network, and may also be an 802.2 logical link network. Further, the wireless local area network may further include a remote authentication dial in user service (Remote Authentication Dial In User Service, RADIUS) and/or a station (Station, STA). The station may be a computer or a notebook computer installed with a wireless network card, and may also be a mobile phone or other equipment with the WIFI function.

The access controller 12 may be connected to the remote authentication dial in user service RADIUS through a wired network. The radio module 11 is connected to the station through an air interface.

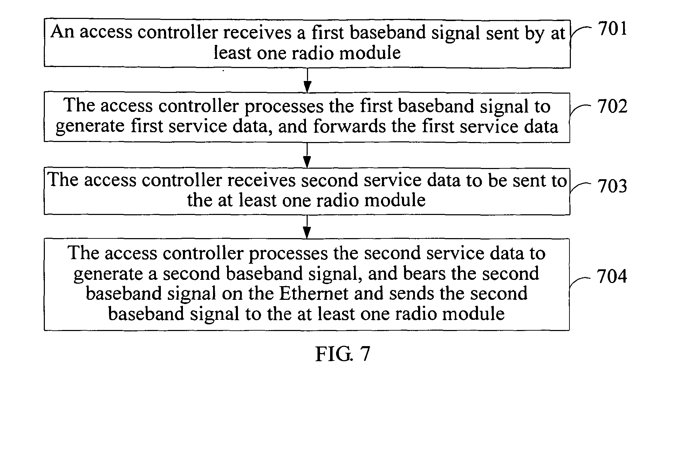

FIG. 7 shows a method for communicating by using the wireless local area network as shown in FIG. 1 provided by an embodiment of the present invention. The method mainly includes the following steps.

701: An access controller receives a first baseband signal sent by at least one radio module.

In this embodiment, at least one radio module converts air interface wireless signals sent by multiple stations into first baseband signals, and bears the first baseband signals on an Ethernet and sends the first baseband signals to the access controller.

702: The access controller processes the first baseband signal to generate first service data, and forwards the first service data.

In this embodiment, the access controller demodulates and decodes the first baseband signal in a centralized manner, to generate first service data, and forwards the first service data.

703: The access controller receives second service data to be sent to the at least one radio module. In this embodiment, the access controller receives second service data sent by a remote authentication dial in user service RADIUS, where the second service data is second service data to be sent to the at least one radio module.

704: The access controller processes the second service data to generate a second baseband signal, and bears the second baseband signal on the Ethernet and sends the second baseband signal to the at least one radio module.

In this embodiment, the access controller encodes and modulates the second service data to generate a baseband signal, and bears the baseband signal on the Ethernet and sends the baseband signal to the at least one radio module.

It should be noted that 701 and 702, 703 and 704 are processing flows in two directions in communication, and may be executed in parallel or in series, which is not limited here.

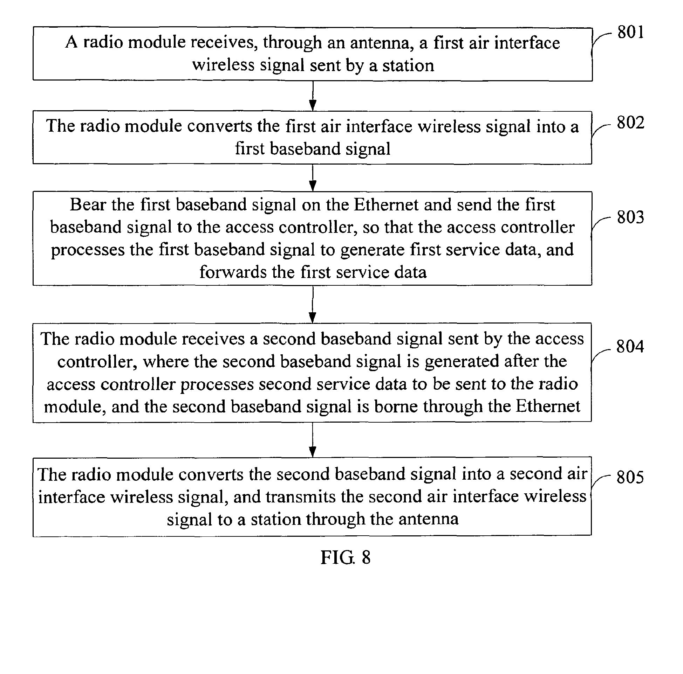

FIG. 8 shows a method for communicating by using the wireless local area network as shown in FIG. 1 provided by an embodiment of the present invention. The method mainly includes the following steps.

801: A radio module receives, through an antenna, a first air interface wireless signal sent by a station.

In this embodiment, at least one radio module receives, through an antenna, a first air interface wireless signal sent by a station.

802: The radio module converts the first air interface wireless signal into a first baseband signal.

In this embodiment, converting, by the radio module, the first air interface wireless signal received from the station into a first baseband signal is specifically:
802a: Perform down-conversion processing on the first air interface wireless signal; and
802b: Convert the first air interface wireless signal that has undergone the down-conversion processing into the first baseband signal.

803: Bear the first baseband signal on the Ethernet and send the first baseband signal to the access controller, so that the access controller processes the first baseband signal to generate first service data, and forwards the first service data.

In this embodiment, the radio module bears the first baseband signal generated after conversion on the Ethernet and sends the first baseband signal to the access controller, and then the access controller processes the first baseband signal to generate the first service data, and forwards the first service data.

804: The radio module receives a second baseband signal sent by the access controller, where the second baseband signal is generated after the access controller processes second service data to be sent to the radio module, and the second baseband signal is borne through the Ethernet.

In this embodiment, the radio module receives a second baseband signal sent by the access controller, where the second baseband signal is generated after the access controller processes second service data to be sent to the radio module, and the second baseband signal is borne through the Ethernet. The access controller encodes and modulates the second service data to generate the second baseband signal.

805: The radio module converts the second baseband signal into a second air interface wireless signal, and transmits the second air interface wireless signal to a station through the antenna.

In this embodiment, the radio module converts the second baseband signal received from the access controller into a second air interface wireless signal, and transmits the second air interface wireless signal to a station through the antenna. Converting, by the radio module, the second baseband signal into a second air interface wireless signal is specifically:
805a: Convert the second baseband signal into an analog signal; and
805b: Perform up-conversion processing on the analog signal to generate the second air interface wireless signal.

It should be noted that 801 and 802 and 803, 804 and 805 are processing flows in two directions in communication, and may be executed in parallel or in series, which is not limited here.

In the embodiments of the present invention, by adopting an access controller AC + RM architecture, on one hand, advantages of a multi-core coprocessor in an access controller AC can be brought into full play; on another hand, by processing a first baseband signal from at least one radio module in a centralized manner by the access controller, resource sharing and dynamic scheduling can be implemented, interference can be reduced, spectrum efficiency can be increased and energy consumption can be reduced, so as to achieve the integrated wireless and wired operation with high quality, low costs and high bandwidth and flexibility; and on still another hand, a slimmed-down RM is very small, and therefore can be easily integrated with an antenna, thereby implementing integration of the RM and the antenna.

The above are merely exemplary embodiments of the present invention, and not inteded to limite the present invention. Any modification, equivalent replacement, and improvement made within the idea and principle of the present invention shall fall within the protection scope of the present invention.

## Claims

1. A wireless local area network, comprising at least one radio module and an access controller connected to the radio module, wherein
the radio module is configured to convert a first air interface wireless signal from a station into a first baseband signal, and bear the first baseband signal on an Ethernet and send the first baseband signal to the access controller;
the access controller is configured to process the first baseband signal from the at least one radio module to generate first service data, and forward the first service data;
the access controller is further configured to receive second service data to be sent to the at least one radio module, process the second service data to generate a second baseband signal, and bear the second baseband signal on the Ethernet and send the second baseband signal to the at least one radio module; and
the radio module is further configured to convert the second baseband signal into a second air interface wireless signal, and transmit the second air interface wireless signal to the station.

2. The wireless local area network according to claim 1, wherein the at least one radio module is connected to the access controller through optical fibers or network cables; or
connected through a layer 2 network; or
connected through a layer 3 network.

3. The wireless local area network according to claim 1 or 2, wherein the access controller specifically comprises:
a service data generating module, configured to demodulate and decode the first baseband signal from the at least one radio module in a centralized manner, to generate the first service data;
a service data forwarding module, configured to forward the first service data;
a service data receiving module, configured to receive the second service data to be sent to the at least one radio module;
a baseband signal generating module, configured to encode and modulate the second service data to generate the second baseband signal; and
a baseband signal sending module, configured to bear the second baseband signal on the Ethernet and send the second baseband signal to the at least one radio module.

4. The wireless local area network according to any one of claims 1 to 3, wherein the radio module specifically comprises:
a down-conversion unit, configured to perform down-conversion processing on the first air interface wireless signal received through an antenna;
an analog-to-digital conversion unit, configured to convert the first air interface wireless signal, which is processed by the down-conversion unit, into the first baseband signal;
a signal bearing unit, configured to bear the first baseband signal on the Ethernet and send the first baseband signal to the access controller;
a digital-to-analog conversion unit, configured to convert the second baseband signal from the access controller into an analog signal; and
an up-conversion unit, configured to perform up-conversion processing on the analog signal output by the digital-to-analog conversion unit, to generate the second air interface wireless signal, and transmit the second air interface wireless signal to the station through the antenna.

5. The wireless local area network according to any one of claims 1 to 4, wherein the wireless local area network further comprises:
a remote authentication dial in user service RADIUS; or
a station; or
a remote authentication dial in user service RADIUS and a station.

6. A method for communicating by using the wireless local area network according to claim 1, comprising:
receiving, by an access controller, a first baseband signal sent by at least one radio module; and
processing, by the access controller, the first baseband signal to generate first service data, and forwarding the first service data.

7. The method according to claim 6, further comprising:
receiving, by the access controller, second service data to be sent to the at least one radio module; and
processing, by the access controller, the second service data to generate a second baseband signal, and bearing the second baseband signal on an Ethernet and sending the second baseband signal to the at least one radio module.

8. The method according to claim 6 or 7, wherein the processing, by the access controller, the first baseband signal to generate the first service data, and forwarding the first service data is specifically:
demodulating and decoding, by the access controller, the first baseband signal in a centralized manner, to generate the first service data, and forwarding the first service data.

9. A method for communicating by using the wireless local area network according to claim 1, comprising:
receiving, by a radio module through an antenna, a first air interface wireless signal sent by a station; and
converting, by the radio module, the first air interface wireless signal into a first baseband signal, and bearing the first baseband signal on an Ethernet and sending the first baseband signal to an access controller, so that the access controller processes the first baseband signal to generate first service data, and forwards the first service data.

10. The method according to claim 9, further comprising:
receiving, by the radio module, a second baseband signal sent by the access controller, wherein the second baseband signal is generated after the access controller processes second service data to be sent to the radio module, and the second baseband signal is borne through the Ethernet; and
converting, by the radio module, the second baseband signal into a second air interface wireless signal, and transmitting the second air interface wireless signal to a station through the antenna.
